# EUROPEAN PATENT APPLICATION

(11) **EP 4 585 356 A1**
(43) Date of publication of application: **16.07.2025**
(21) Application number: 24873869.2
(22) Date of filing: 20.06.2024
(51) Int. Cl.: B23K 26/362, B23K 26/16, B23K 37/04, B08B 15/02, B23K 26/70, B23K 37/00, H01M 4/04

(54) **ELECTRODE NOTCHING DEVICE AND ELECTRODE NOTCHING METHOD USING SAME**

(30) Priority: 06.11.2023 KR 20230152101
(71) Applicant: LG Energy Solution, Ltd., SEOUL 07335 (KR)
(72) Inventor: LEE, Woo Jung, Daejeon 34122 (KR); JEONG, Seon Yong, Daejeon 34122 (KR); KIM, Gil Woo, Daejeon 34122 (KR); KIM, Jun Wan, Daejeon 34122 (KR); KIM, Tae Su, Daejeon 34122 (KR)
(74) Representative: Goddar, Heinz J.
(86) International application number: PCT/KR2024/008529
(87) International publication number: WO 2025/100669

(57) **Abstract**

Disclosed are an electrode notching apparatus including a transfer jig configured to face one surface of an electrode to be notched so as to support the electrode, a laser unit configured to radiate a laser toward the electrode in order to notch a predetermined area of the electrode, a pattern jig provided on one side of the transfer jig, the pattern jig being configured to support one edge of the electrode, the pattern jig including a first surface having a first incision portion defined therein and configured to allow the laser radiated by the laser unit to pass therethrough, and a suction unit configured to capture debris generated by the laser during a cutting process, wherein the suction unit includes a first suction portion located under the pattern jig and a second suction portion located at a side surface of the pattern jig, and an electrode notching method using the same.

## Description

### [Technical Field]

This application claims the benefit of priority to Korean Patent Application No. 2023-0152101 filed on November 6, 2023, the disclosure of which is incorporated herein by reference in its entirety.

The present invention relates to an electrode notching apparatus and an electrode notching method using the same, and more particularly to an electrode notching apparatus for machining a non-coated portion of an electrode sheet to form an electrode tab and an electrode notching method using the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

In order to satisfy demand of users with respect to secondary batteries, a plurality of battery cells is disposed in a small-sized device, whereas a battery module including a plurality of battery cells electrically connected to each other or a battery pack including a plurality of battery modules is used in a vehicle, etc.

Meanwhile, depending on the shape of a battery case, lithium secondary batteries are classified into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of an aluminum laminate sheet.

The electrode assembly is formed by stacking a positive electrode and a negative electrode in the state in which a separator is interposed therebetween, and each of the positive electrode and the negative electrode is manufactured through a process of forming an electrode tab at a corresponding one of a positive electrode sheet and a negative electrode sheet and a process of cutting the electrode sheet into a unit electrode.

Particularly, in the process of forming the electrode tab, a laser is radiated to remove the remaining part of a non-coated portion of the electrode sheet excluding the electrode tab, and if debris scattered at this time is attached to the electrode, the electrode becomes defective. For this reason, all of the debris generated must be reliably captured and removed.

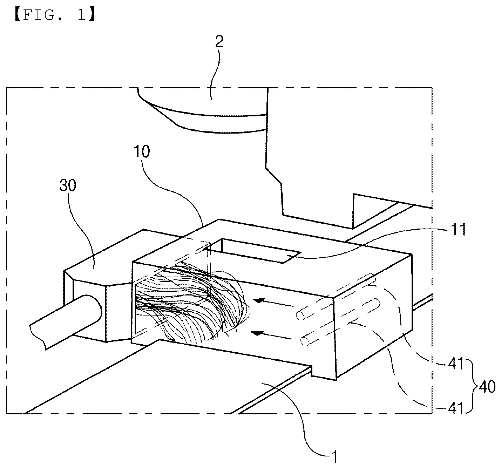

FIG. 1 is a view showing conventional removal of debris during laser notching. As shown in FIG. 1, a blowing unit 40 communicating with a suction unit 30 and including a plurality of air knives 41 is provided in a main body 10. When the blowing unit 40 blows air and debris in a direction parallel to a width direction of an electrode sheet 1 that is transferred, the blown air and debris are suctioned into the suction unit 30, which is provided at the position facing the blowing unit 40 so as to communicate with the blowing unit, whereby the debris is removed.

However, since the amount of debris introduced into the suction unit 30 is dependent on the blowing force of the blowing unit 40 located so as to face the suction unit, a small or large amount of debris may not be introduced into the suction unit 30.

### (Prior Art Document)

(Patent Document 1) Korean Patent Application Publication No. 2015-0062847

### [Disclosure]

### [Technical Problem]

The present invention has been made in view of the above problems, and it is an object of the present invention to provide an electrode notching apparatus capable of reliably capturing and removing debris generated during electrode notching using a laser and an electrode notching method using the same.

### [Technical Solution]

In order to accomplish the above object, an electrode notching apparatus according to the present invention includes a transfer jig (100) configured to face one surface of an electrode (E) to be notched so as to support the electrode (E), a laser unit (200) configured to radiate a laser toward the electrode (E) in order to cut a predetermined area of the electrode (E), a pattern jig (300) provided on one side of the transfer jig (100), the pattern jig being configured to support one edge of the electrode (E), the pattern jig including a first surface (310) having a first incision portion (311) defined therein and configured to allow the laser radiated by the laser unit (200) to pass therethrough, and a suction unit (400) configured to capture debris generated by the laser during a cutting process, wherein the suction unit (400) includes a first suction portion (410) located under the pattern jig (300) and a second suction portion (420) located at a side surface of the pattern jig (300).

Also, in the electrode notching apparatus according to the present invention, the pattern jig (300) may include a first surface (310) configured to face the electrode (E), the first surface having a first incision portion (311) defined therein and having a predetermined shape, a second surface (320) located on one edge of the first surface (310), the second surface having a second incision portion (321) defined therein and having a predetermined shape, a third surface (330) located on the other edge of the first surface (310), the third surface having a third incision portion (331) defined therein and having a predetermined shape, a fourth surface (340) connecting edges of the first surface (310), the second surface (320), and the third surface (330) to each other, the fourth surface having a fourth incision portion (341) defined therein and having a predetermined shape, and a fifth surface (350) connecting edges of the second surface (320), the third surface (330), and the fourth surface (340) to each other, wherein the first incision portion (311), the second incision portion (321), the third incision portion (331), and the fourth incision portion (341) may communicate with each other.

Also, in the electrode notching apparatus according to the present invention, a front surface of the transfer jig (100) facing the one surface of the electrode (E) and the first surface (310) of the pattern jig (300) may have predetermined radii of curvature.

Also, in the electrode notching apparatus according to the present invention, the radius of curvature of the front surface of the transfer jig (100) and the radius of curvature of the first surface (310) of the pattern jig (300) may be equal to each other.

Also, in the electrode notching apparatus according to the present invention, the second incision portion (321) and the third incision portion (331) of the pattern jig (300) may have flow channels communicating with each other, and each of the flow channels may have a same radius of curvature as the radius of curvature of the first surface (310).

Also, in the electrode notching apparatus according to the present invention, the first suction portion (410) may face the third incision portion (331), and the second suction portion (420) may face the fourth incision portion (341).

Also, in the electrode notching apparatus according to the present invention, the second suction portion (420) may include a first transfer pipe (421) configured to allow debris discharged through the fourth incision portion (341) to be introduced thereinto and a second transfer pipe (422) connected to the other side of the first transfer pipe (421), the second transfer pipe being bent at a predetermined angle.

Also, in the electrode notching apparatus according to the present invention, the first transfer pipe (421) may have a shape having a sectional area gradually decreasing in a direction toward the second transfer pipe (422).

Also, in the electrode notching apparatus according to the present invention, the first incision portion (311) may include a 1a incision portion (311a) having a predetermined area, the 1a incision portion being configured to allow the laser to pass therethrough and a 1b incision portion (311b) located on one side of the 1a incision portion (311a), the 1b incision portion having an area larger than an area of the 1a incision portion (311a), wherien one side of the first transfer pipe (421) may be located in a space defined by the 1b incision portion (311b) and the fourth incision portion

(341) .

Also, the electrode notching apparatus according to the present invention may further include a scattering prevention unit (500) configured to prevent scattering of debris, wherein the scattering prevention unit (500) may be located in front of the transfer jig (100).

Also, in the electrode notching apparatus according to the present invention, the scattering prevention unit (500) may include a first prevention member (510) extending from the front surface of the transfer jig (100) at a predetermined angle, a second prevention member (520) extending from one side surface of the first prevention member (510) toward the pattern jig (300), and a third prevention member (530) extending from the one side surface of the first prevention member (510) toward the pattern jig (300), the third prevention member being spaced apart from the second prevention member (520) by a predetermined distance.

Also, the electrode notching apparatus according to the present invention may further include a guide unit (600) configured to guide movement of the electrode (E), wherein one side surface of the guide unit (600) may be fixed to the one side surface of the first prevention member (510), and a rear surface of the guide unit may be located opposite the first surface (310) of the pattern jig (300).

In addition, an electrode notching method using the electrode notching apparatus according to the present invention includes (S1) supplying the electrode (E) to the transfer jig (100) and the pattern jig (300) and (S2) radiating the laser through the laser unit (200) to notch a part of an edge of the electrode (E) and capturing debris generated during a notching process through the suction unit (400).

### [Advantageous Effects]

As is apparent from the above description, an electrode notching apparatus according to the present invention and an electrode notching method using the same have the advantage that a pattern jig is provided with a flow channel extending from top to bottom and a suction unit is located under the pattern jig and at a side surface of the pattern jig to form a dual suction structure, whereby it is possible to reliably capture and remove debris generated during notching.

In addition, the electrode notching apparatus according to the present invention and the electrode notching method using the same have the merit that air may be supplied to the flow channel formed through the pattern jig from top to bottom, whereby it is possible to prevent friction between an electrode and a transfer jig and friction between the electrode and the pattern jig and to make it easier for the debris to move to the suction unit.

### [Description of Drawings]

FIG. 1 is a view showing conventional removal of debris during laser notching.
FIG. 2 is a conceptual view illustrating notching of an electrode using an electrode notching apparatus according to an embodiment of the present invention.
FIG. 3 is a front view of the electrode notching apparatus shown in FIG. 2.
FIG. 4 is a side view of the electrode notching apparatus shown in FIG. 2.
FIG. 5 is a top view of the electrode notching apparatus shown in FIG. 2.
FIG. 6 is an exploded perspective view of the electrode notching apparatus shown in FIG. 2.
FIG. 7 is an enlarged perspective view showing the state in which a transfer jig and a pattern jig are coupled to each other in the electrode notching apparatus shown in FIG. 2.
FIG. 8 is a front view of the jigs shown in FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

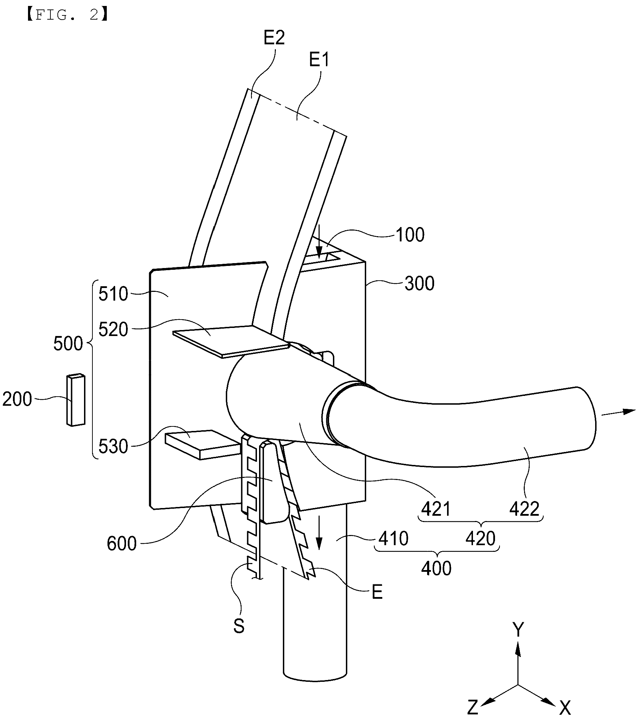

Also, in the drawings, a forward direction means a direction in which an electrode faces a laser unit (8 o'clock in FIG. 2), and a rearward direction means a direction in which the electrode faces a transfer jig 100 (2 o'clock in FIG. 2).

Hereinafter, an electrode notching apparatus according to the present invention will be described.

FIG. 2 is a conceptual view illustrating notching of an electrode using an electrode notching apparatus according to an embodiment of the present invention. As shown in FIG. 2, the electrode notching apparatus according to the present invention is an apparatus for notching an edge of an electrode E, and includes a transfer jig 100, a laser unit 200, a pattern jig 300, a suction unit 400, a scattering prevention unit 500, and a guide unit 600.

Here, the electrode E may be a positive electrode or a negative electrode, and each of the positive electrode and the negative electrode includes a coated portion E1, to which an active material is applied, and a non-coated portion E2, to which no active material is applied. A laser beam is radiated toward the non-coated portion E2, which is located at the edge of the electrode, to form a tab having a predetermined shape. Of course, scrap S, which is a part cut off to form the tab, must be separated from the electrode E.

Meanwhile, a negative electrode sheet is manufactured by applying a slurry mixture of a negative electrode active material and a binder to a negative electrode current collector made of copper. As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O_{3,} Sb₂O_{4,} Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

A positive electrode sheet is manufactured by applying a slurry mixture of a positive electrode active material and a binder to a positive electrode current collector made of aluminum. The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiV₃O₄, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

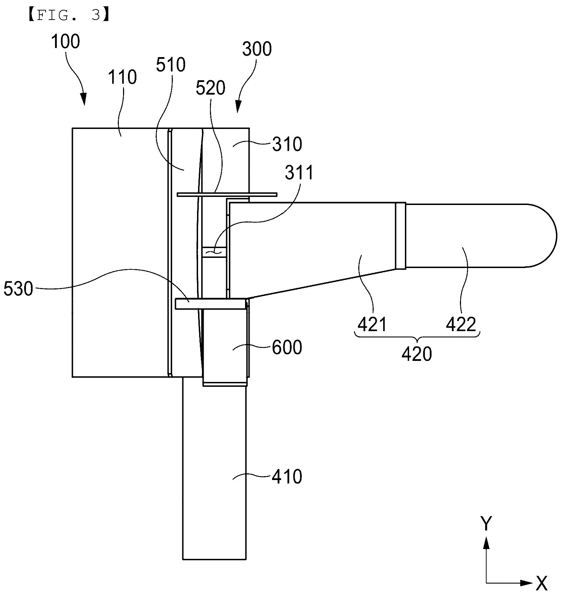

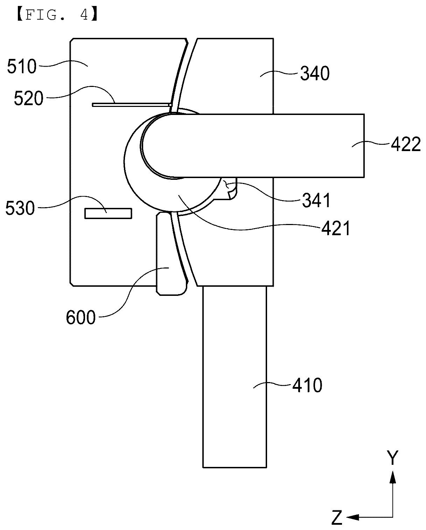

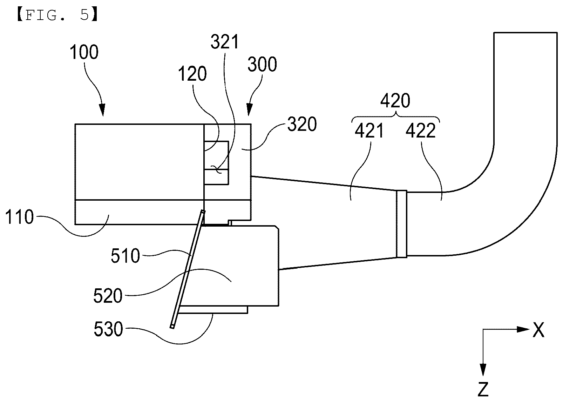

FIG. 3 is a front view of the electrode notching apparatus shown in FIG. 2, FIG. 4 is a side view of the electrode notching apparatus shown in FIG. 2, and FIG. 5 is a top view of the electrode notching apparatus shown in FIG. 2.

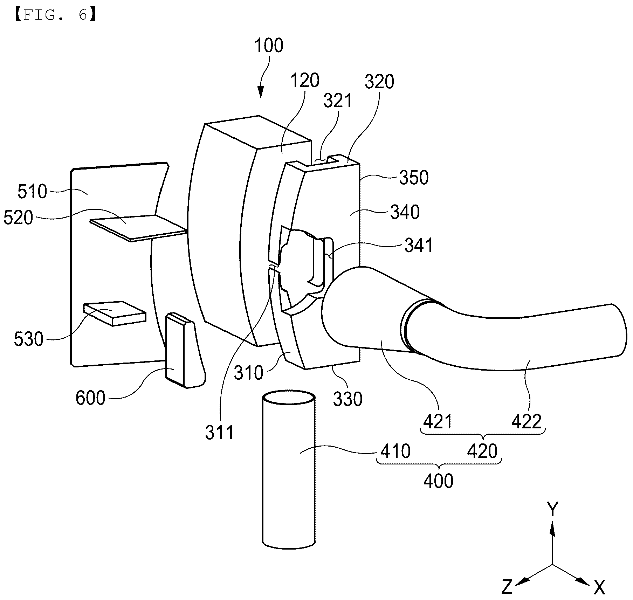

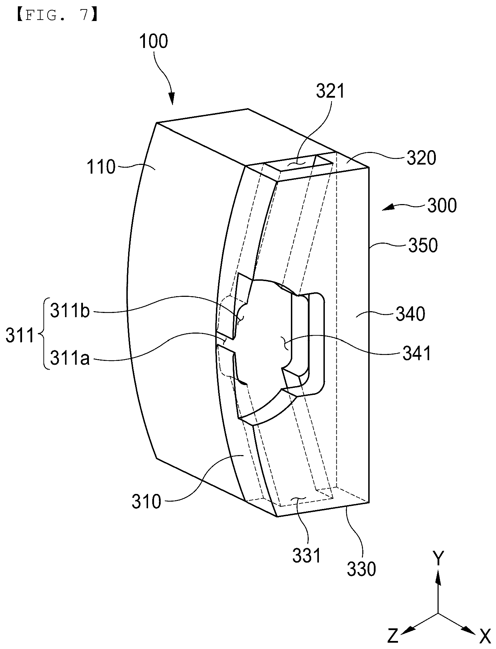

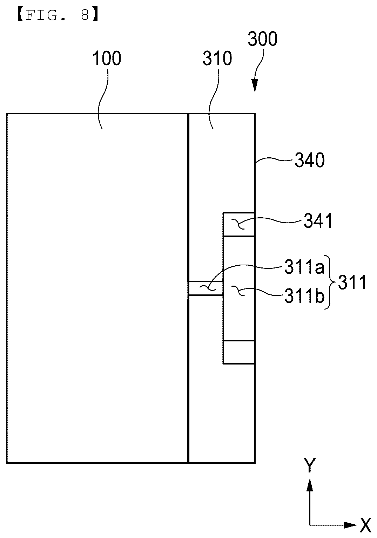

In addition, FIG. 6 is an exploded perspective view of the electrode notching apparatus shown in FIG. 2, FIG. 7 is an enlarged perspective view showing the state in which a transfer jig and a pattern jig are coupled to each other in the electrode notching apparatus shown in FIG. 2, and FIG. 8 is a front view of the jigs shown in FIG. 7.

Referring to FIGs. 2 to 8, first, the transfer jig 100 may be configured to correspond to one surface of an electrode E to be notched so as to support the electrode E. In other words, the transfer jig 100 supports the electrode E, and specifically supports the electrode E such that a part (e.g., a non-coated portion E2) of the electrode E can be continuously notched.

In addition, the transfer jig 100 may be configured such that a front surface 110 facing one surface of the electrode E has a predetermined radius of curvature. In this case, the front surface 110 of the transfer jig 100 may be set to an appropriate curvature that reduces friction with one surface of the electrode E and takes into account the direction of movement of the electrode E in a wound state and the direction of movement of the electrode E in a notched state.

The laser unit 200 may be configured to radiate a laser toward the electrode E in order to notch a predetermined area of the electrode E supported on the transfer jig 100.

Here, the predetermined area of the electrode E may be the non-coated portion E2 of the electrode E, as described above.

In addition, the laser unit 200 may be disposed at the position opposite the transfer jig 100 so as to radiate a laser toward the electrode E.

The wavelength of the laser radiated by the laser unit 200 may be a wavelength within an ultraviolet region, a wavelength within a green light region, or a wavelength within an infrared region. As an example, the wavelength of the laser may be a wavelength of 1000 µm to 1100 µm within the infrared region; however, the present invention is not limited thereto as long as the laser is radiated to the non-coated portion E2 of the electrode E to form an electrode tab 121. A laser unit well known to those skilled in the art may be used as the laser unit 200, and therefore a more detailed description thereof will be omitted.

Next, the pattern jig 300 will be described. The pattern jig 300 may be provided on one side of the transfer jig 100 to support one edge of the electrode E. The pattern jig 300 may include a first surface 310, a second surface 320, a third surface 330, a fourth surface 340, and a fifth surface 350. For example, the pattern jig 300 may be provided on one side of the transfer jig 100 in the state in which the other side of the pattern jig 300 opposite a side surface 120 of the transfer jig 100 is open.

The first surface 310 of the pattern jig 300 may be a front surface facing one surface of the electrode E, among the surfaces of the pattern jig 300. For example, the first surface 310 may be disposed at a position extending from a front surface 110 of the transfer jig 100 to one side. In addition, the first surface 310 of the pattern jig 300 may be configured to have a predetermined radius of curvature, e.g., the same radius of curvature as the front surface 110 of the transfer jig 100.

The first surface 310 may face the electrode E, and may have a first incision portion 311 defined therein and having a predetermined shape. The laser radiated by the laser unit 200 passes through the first incision portion 311.

Specifically, the first incision portion 311 may include a 1a incision portion 311a and a 1b incision portion 311b. The 1a incision portion 311a may have a predetermined area and may be configured to allow the laser to pass therethrough, and the 1b incision portion 311b may be located on one side of the 1a incision portion 311a and may be formed so as to have a larger area than the 1a incision portion 311a.

The 1a incision portion 311a may be a pattern hole formed in an electrode tab formation portion of the non-coated portion E2 such that the laser unit 200 can radiate the laser along the 1a incision portion 311a for notching to cut a part of the non-coated portion E2.

The 1b incision portion 311b may be formed as an opening into which a part of a first suction portion 410 of the suction unit 400 is inserted, a detailed description of which will follow.

The second surface 320 may be a surface located on one edge of the first surface 310, and the third surface 330 may be a surface located on the other edge of the first surface 310.

Referring to FIG. 7, one edge of the first surface 310 may be at 12 o'clock, and the other edge of the first surface 310 may be at 6 o'clock. That is, the second surface 320 may be an upper surface of the pattern jig 300, and the third surface 330 may be a lower surface of the pattern jig 300.

In addition, a second incision portion 321 of a predetermined shape may be formed in the second surface 320, and a third incision portion 331 of a predetermined shape may be formed in the third surface 330. The second incision portion 321 and the third incision portion 331 may be configured to have flow channels communicating with each other.

The flow channels formed in the second incision portion 321 and the third incision portion 331 may be configured to have the same radius of curvature as the radius of curvature of the first surface 310. That is, the radius of curvature of the front surface of the transfer jig 100, the radius of curvature of the first surface 310 of the pattern jig 300, and the radius of curvature of each of the flow channels formed in the second incision portion 321 and the third incision portion 331 may all be set to the same radius of curvature.

The fourth surface 340 may be a surface that connects edges of the first surface 310, the second surface 320, and the third surface 330 to each other. In other words, the fourth surface 340 may be a side surface formed on one side of the pattern jig 300 (at 4 o'clock in FIG. 7).

Meanwhile, a fourth incision portion 341 of a predetermined shape may be formed in the fourth surface 340, wherein the fourth incision portion 341 may be connected to the 1b incision portion 311b to form an incised shape. In addition, the first incision portion 311, the second incision portion 321, the third incision portion 331, and the fourth incision portion 341 may communicate with each other.

The fifth surface 350 may be a surface that connects edges of the second surface 320, the third surface 330, and the fourth surface 340 to each other, i.e., a rear surface provided at the rear of the pattern jig 300 (at 2 o'clock in FIG. 7).

Next, the suction unit 400 includes a first suction portion 410 and a second suction portion 420, and is configured to capture debris generated during a notching process using a laser. In other words, the suction unit 400 may be configured to capture debris generated when the laser unit 200 radiates the laser to the non-coated portion E2 of the electrode E for notching to form an electrode tab.

The first suction portion 410 may be located so as to face the lower surface of the pattern jig 300, more specifically so as to face the third incision portion 331. For example, the first suction portion 410 may be connected to a container (not shown) configured to collect the captured debris, and may be connected to a known suction means (not shown), such as a vacuum pump, to ensure that the interior of the pattern jig 300 is under negative pressure, although not shown in the figures.

In addition, an opening formed in one end of the first suction portion 410 may be formed to have an area greater than the area of the third incision portion 331 to capture all of the debris discharged through the third incision portion 331.

The second suction portion 420 may be located so as to face the side surface of the pattern jig 300, more specifically so as to face the fourth incision portion 341. That is, the second suction portion 420 may be located on one side of the pattern jig 300.

The second suction portion 420 may include a first transfer pipe 421 and a second transfer pipe 422. One side of the first transfer pipe 421 may be located in the space formed by the 1b incision portion 311b and the fourth incision portion 341 such that the debris discharged through the fourth incision portion 341 can be introduced into the first transfer pipe 421.

For example, the first transfer pipe 421 may be configured such that a part of one side of the first transfer pipe 421 is inserted into the fourth incision portion 341 and the 1b incision portion 311b, and the remaining part of the first transfer pipe partially protrudes forwardly of the pattern jig 300 to capture some of the debris generated during the cutting process by the laser.

Here, the first transfer pipe 421 may be provided in a shape having a sectional area gradually decreasing toward the second transfer pipe 422, i.e., a conical shape having an inner diameter or a sectional area gradually decreasing from one side to the other side to facilitate transfer of the captured debris.

The second transfer pipe 422 may be connected to the other side of the first transfer pipe 421, and the second transfer pipe 422 may be bent at a predetermined angle. For example, the second transfer pipe 422 may be connected to a container (not shown) configured to collect the debris captured from the first transfer pipe 421, and may be connected to a known suction means (not shown), such as a vacuum pump, to ensure that the interior of the pattern jig 300 is under negative pressure, although not shown in the figures.

In the electrode notching apparatus according to the present invention, as described above, the first suction portion 410 is disposed at the third incision portion 331 and the second suction portion 420 is disposed at the fourth incision portion 341, whereby debris capture efficiency is improved through a dual suction structure, and therefore it is possible to extend the pattern jig cleaning cycle, which may reduce equipment downtime and may increase productivity.

Also, in the electrode notching apparatus according to the present invention, air is introduced through the flow channels formed in the second incision portion 321 and the third incision portion 331, which may contribute to improvement in debris capture efficiency of the first suction portion 410 and/or the second suction portion 420.

Next, the scattering prevention unit 500 may be configured to prevent scattering of debris and may be located in front of the transfer jig 100. The scattering prevention unit 500 may include a first prevention member 510, a second prevention member 520, and a third prevention member 530.

The first prevention member 510 may be configured to extend from the front surface of the transfer jig 100 at a predetermined angle. The first prevention member 510 may be provided on the other side (at 9 o'clock in FIG. 3) of the first incision portion 311 so as to be opposite the second suction portion 420. That is, the first prevention member 510 may be configured to prevent scattering of some of the debris that has not been suctioned into the second suction portion 420, and may be attached to one surface of the first prevention member 510.

The second prevention member 520 may extend from one side surface of the first prevention member 510 toward the pattern jig 300. In addition, the third prevention member 530 may extend from one side surface of the first prevention member 510 toward the pattern jig 300 so as to be spaced apart from the second prevention member 520 by a predetermined distance.

In other words, the second prevention member 520 may be disposed above the first incision portion 311 (12 o'clock in FIG. 3), and the third prevention member 530 may be disposed under the first incision portion 311 (6 o'clock in FIG. 3).

Accordingly, the scattering prevention unit 500 may be provided on the other side, the upper side, and the lower side of the first incision portion 311 except for one side of the first incision portion where the second suction portion 420 is located, whereby it is possible to prevent scattering of some of the debris that has not been suctioned through the second suction portion 420.

The guide unit 600 may be configured to guide the movement of the electrode E. For example, the guide unit 600 may guide the movement of the electrode E such that scrap S generated by notching and the electrode E having electrode tabs formed thereon are separated from each other.

Specifically, the guide unit 600 may be located such that a side surface thereof (11 o'clock in FIG. 2) is fixed to one side surface of the first prevention member 510 and a rear surface thereof (2 o'clock in FIG. 2) is opposite the first surface 310 of the pattern jig 300.

Here, that the rear surface of the guide unit 600 is opposite the first surface 310 of the pattern jig 300 may mean that the rear surface of the guide unit 600 is disposed so as to face the first surface 310 of the pattern jig 300.

In addition, the rear surface of the guide unit 600 may be configured to correspond to the radius of curvature of the first surface 310 of the pattern jig 300. For example, the first surface 310 of the pattern jig 300 may be formed to have a curvature convex in the forward direction (9 o'clock in FIG. 4), and the rear surface of the guide unit 600 may be formed to have a curvature concave in the rearward direction (9 o'clock in FIG. 4) so as to correspond thereto. In addition, the rear surface of the guide unit 600 may be configured to have a rounded shape so as to prevent damage to the electrode E.

As such, the rear surface of the guide unit 600 may guide the movement of the electrode E having the electrode tabs formed by notching, and the front surface of the guide unit may guide the movement of the scrap S generated by notching.

Therefore, the scrap S generated by notching moves downward along the front surface of the guide unit 600, which facilitates collection of the scrap S, winding of the electrode E having the electrode tabs formed thereon may be easily achieved, and problems in the notching process caused by the scrap S may be fundamentally prevented.

Next, a method of notching an electrode using the electrode notching apparatus will be described.

The electrode notching method according to the present invention may include the steps of (S1) supplying an electrode E to the transfer jig 100 and the pattern jig 300 and (S2) radiating a laser through the laser unit 200 to notch a part of an edge of the electrode E and capturing debris generated during the notching process through the suction unit 400.

Step S2 may further include a step of introducing air through the flow channels in the second incision portion 321 and the third incision portion 331 by suction of the suction unit 400.

Here, a predetermined level of negative pressure may be formed in the suction unit 400 by the suction means (not shown).

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Transfer jig
110: Front surface 120: Side surface
200: Laser unit
300: Pattern jig
310: First surface 311: First incision portion
311a: 1a incision portion 311b: 1b incision portion
320: Second surface 321: Second incision portion
330: Third surface 331: Third incision portion
340: Fourth surface 341: Fourth incision portion
350: Fifth surface
400: Suction unit
410: First suction portion
420: Second suction portion
421: First transfer pipe 422: Second transfer pipe
500: Scattering prevention unit
510: First prevention member 520: Second prevention member
530: Third prevention member
600: Guide unit
E: Electrode
E1: Coated portion E2: Non-coated portion
S: Scrap

## Claims

1. An electrode notching apparatus comprising:
a transfer jig configured to face one surface of an electrode to be notched so as to support the electrode;
a laser unit configured to radiate a laser toward the electrode in order to cut a predetermined area of the electrode;
a pattern jig provided on one side of the transfer jig, the pattern jig being configured to support one edge of the electrode, the pattern jig comprising a first surface having a first incision portion defined therein and configured to allow the laser radiated by the laser unit to pass therethrough; and
a suction unit configured to capture debris generated by the laser during a cutting process, wherein
the suction unit comprises a first suction portion located under the pattern jig and a second suction portion located at a side surface of the pattern jig.

2. The electrode notching apparatus according to claim 1, wherein the pattern jig comprises:
the first surface configured to face the electrode, the first surface having the first incision portion defined therein and having a predetermined shape;
a second surface located on one edge of the first surface, the second surface having a second incision portion defined therein and having a predetermined shape;
a third surface located on the other edge of the first surface, the third surface having a third incision portion defined therein and having a predetermined shape;
a fourth surface connecting edges of the first surface, the second surface, and the third surface to each other, the fourth surface having a fourth incision portion defined therein and having a predetermined shape; and
a fifth surface connecting edges of the second surface, the third surface, and the fourth surface to each other,
wherein the first incision portion, the second incision portion, the third incision portion, and the fourth incision portion communicate with each other.

3. The electrode notching apparatus according to claim 2, wherein a front surface of the transfer jig facing the one surface of the electrode and the first surface of the pattern jig have predetermined radii of curvature.

4. The electrode notching apparatus according to claim 3, wherein the radius of curvature of the front surface of the transfer jig and the radius of curvature of the first surface of the pattern jig are equal to each other.

5. The electrode notching apparatus according to claim 3, wherein the second incision portion and the third incision portion of the pattern jig have flow channels communicating with each other, and each of the flow channels has a same radius of curvature as the radius of curvature of the first surface.

6. The electrode notching apparatus according to claim 2, wherein the first suction portion faces the third incision portion, and the second suction portion faces the fourth incision portion.

7. The electrode notching apparatus according to claim 6, wherein the second suction portion comprises:
a first transfer pipe configured to allow debris discharged through the fourth incision portion to be introduced thereinto; and
a second transfer pipe connected to the other side of the first transfer pipe, the second transfer pipe being bent at a predetermined angle.

8. The electrode notching apparatus according to claim 7, wherein the first transfer pipe has a shape having a sectional area gradually decreasing in a direction toward the second transfer pipe.

9. The electrode notching apparatus according to claim 7, wherein the first incision portion comprises:
a 1a incision portion having a predetermined area, the 1a incision portion being configured to allow the laser to pass therethrough; and
a 1b incision portion located on one side of the 1a incision portion, the 1b incision portion having an area larger than an area of the 1a incision portion,
wherein one side of the first transfer pipe is located in a space defined by the 1b incision portion and the fourth incision portion.

10. The electrode notching apparatus according to claim 3, further comprising a scattering prevention unit configured to prevent scattering of debris, wherein the scattering prevention unit is located in front of the transfer jig.

11. The electrode notching apparatus according to claim 10, wherein the scattering prevention unit comprises:
a first prevention member extending from the front surface of the transfer jig at a predetermined angle;
a second prevention member extending from one side surface of the first prevention member toward the pattern jig; and
a third prevention member extending from the one side surface of the first prevention member toward the pattern jig, the third prevention member being spaced apart from the second prevention member by a predetermined distance.

12. The electrode notching apparatus according to claim 11, further comprising a guide unit configured to guide movement of the electrode, wherein one side surface of the guide unit is fixed to the one side surface of the first prevention member, and a rear surface of the guide unit is located opposite the first surface of the pattern jig.

13. An electrode notching method using the electrode notching apparatus according to any one of claims 1 to 12, the electrode notching method comprising:
(S1) supplying the electrode to the transfer jig and the pattern jig; and
(S2) radiating the laser through the laser unit to notch a part of an edge of the electrode and capturing debris generated during a notching process through the suction unit.
